# EUROPEAN PATENT APPLICATION

(11) **EP 4 510 417 A1**
(43) Date of publication of application: **19.02.2025**
(21) Application number: 23802509.2
(22) Date of filing: 23.03.2023
(51) Int. Cl.: H02J 7/00

(54) **POWER BATTERY CONTROL CIRCUIT, SYSTEM, AND METHOD**

(30) Priority: 10.05.2022 CN 202210501735
(71) Applicant: Contemporary Amperex Technology (Hong Kong) Limited, Hong Kong (HK)
(72) Inventor: CHEN, Wei, Ningde, Fujian 352100 (CN); ZHAO, Yuanmiao, Ningde, Fujian 352100 (CN); PAN, Xianxi, Ningde, Fujian 352100 (CN); HUANG, Xiaojian, Ningde, Fujian 352100 (CN); YAN, Yu, Ningde, Fujian 352100 (CN); DAN, Zhimin, Ningde, Fujian 352100 (CN)
(74) Representative: Ziebig Hengelhaupt Intellectual Property Attorneys Patentanwaltskanzlei PartGmbB
(86) International application number: PCT/CN2023/083342
(87) International publication number: WO 2023/216733

(57) **Abstract**

This application provides an electric vehicle battery control circuit, system, and control method. The electric vehicle battery control circuit includes an electric vehicle battery, an energy storage module, a charging module, and a regulation switch component; where the charging module includes a switch module; the electric vehicle battery is connected in parallel with the switch module; the regulation switch component includes multiple switches, where the multiple switches are disposed between the electric vehicle battery and the charging module and between the energy storage module and the charging module; and the energy storage module, the regulation switch component, and the switch module are configured to, in response to control signals, regulate charging/discharging between the electric vehicle battery and the energy storage module, or regulate charging/discharging between the electric vehicle battery and the charging module as well as the energy storage module. This meets different heating needs of the electric vehicle battery in different scenarios and also avoids various faults of the motor.

## Description

### TECHNICAL FIELD

This application relates to the field of battery technologies, specifically to an electric vehicle battery control circuit, system, and control method.

### BACKGROUND

Traction batteries are widely used in new energy vehicles, consumer electronics, energy storage systems, and other fields thanks to their advantages such as high energy density, support for cyclic charging, safety, and environment friendliness. With the development of battery technology, various performances of traction batteries are continuously improved, especially the voltage of traction batteries, which generally has a significant increase.

However, currently, to enhance the adaptability of electric vehicles in cold regions and improve the battery heating effects, in most cases, the heating technology of traction batteries is used. However, during the battery heating process, motors may experience faults such as phase loss or short circuits. How the charging/discharging of traction batteries is flexibly adjusted and controlled without encountering faults is an urgent problem to be solved.

### SUMMARY

Embodiments of this application provide an electric vehicle battery control circuit, system, and control method, capable of flexibly regulating charging/discharging voltage loop of the electric vehicle battery to meet the needs for charging voltage or discharging voltage of the electric vehicle battery in different scenarios.

According to a first aspect, this application provides an electric vehicle battery control circuit, including an electric vehicle battery, an energy storage module, a charging module, and a regulation switch component. The charging module includes a switch module; the electric vehicle battery is connected in parallel with the switch module; the regulation switch component includes multiple switches, where the multiple switches are disposed between the electric vehicle battery and the charging module and between the energy storage module and the charging module; and the energy storage module, the regulation switch component, and the switch module are configured to, in response to control signals, regulate charging/discharging between the electric vehicle battery and the energy storage module, or regulate charging/discharging between the electric vehicle battery and the charging module as well as the energy storage module.

According to the electric vehicle battery control circuit provided in the embodiments of this application, the energy storage module, the regulation switch component, and the switch module are controlled to achieve switching between different charging/discharging circuits of the electric vehicle battery, thereby regulating charging/discharging between the electric vehicle battery and the energy storage module, or regulating charging/discharging between the electric vehicle battery and the charging module as well as the energy storage module, so as to meet different heating needs of the electric vehicle battery in different scenarios and also avoid various faults of the motor.

In some embodiments, the regulation switch component includes a first switch, a second switch, and a third switch; where the first switch is disposed between the energy storage module and the charging module; and the second switch and the third switch are disposed between the electric vehicle battery and the charging module.

According to the electric vehicle battery control circuit provided in this embodiments of this application, switches of the regulation switch component are controlled to be disposed at different positions in the heating circuit of the electric vehicle battery, to achieve the purpose of switching between different heating circuits. Different switches in the regulation switch component are controlled to turn on or turn off to form, within a same circuit structure, a mode of regulating charging/discharging between the electric vehicle battery and the energy storage module or a mode of regulating charging/discharging between the electric vehicle battery and the charging module as well as the energy storage module, thereby meeting different heating needs of the electric vehicle battery in different scenarios and also avoiding various faults of the motor.

In some embodiments, the energy storage module includes a first leg set and a first energy storage component, the first leg set being connected in parallel with the electric vehicle battery; the switch module includes a second leg set; a first terminal of the first energy storage component is connected to the first leg set, one terminal of the first switch is connected to a second terminal of the first energy storage component, and another terminal of the first switch is connected to a first terminal of the switch module; one terminal of the second switch is connected to connection points of all upper legs of the first leg set, and another terminal of the second switch is connected to connection points of all upper legs in the switch module; one terminal of the third switch is connected to connection points of all lower legs of the first leg set, and another terminal of the third switch is connected to connection points of all lower legs in the switch module; and at least one leg of the switch module is connected in parallel with the first leg set.

According to the electric vehicle battery control circuit provided in the embodiments of this application, in addition to controlling the regulation switch component, it also controls the energy storage module and the switch module to achieve switching between different heating circuits. With different legs in the energy storage module and the switch module controlled to turn on/off, it is possible to form, within a same circuit structure, a mode of regulating charging/discharging between the electric vehicle battery and the energy storage module or a mode of regulating charging/discharging between the electric vehicle battery and the charging module as well as the energy storage module, thereby meeting different heating needs of the electric vehicle battery in different scenarios and also avoiding various faults of the motor.

In some embodiments, the regulation switch component further includes a leg selection switch component; another terminal of the first switch is connected to a first terminal of the leg selection switch component, and another terminal of the leg selection switch component is connected to the second leg set.

According to the electric vehicle battery control circuit provided in the embodiments of this application, legs in the second leg set can be selected through the leg selection switch component according to needs. One leg can be selected to enter the circuit, or two or all legs can be selected to enter the control circuit, meeting different heating needs of the electric vehicle battery in different scenarios.

In some embodiments, the charging module further includes a second energy storage component connected to the switch module, and the first switch is disposed between the energy storage module and the second energy storage component.

According to the electric vehicle battery control circuit provided in the embodiments of this application, providing the second energy storage component in the charging module improves the heating efficiency during the battery self-heating process, meeting the need for rapid battery self-heating.

In some embodiments, one terminal of the first switch is connected to the second terminal of the first energy storage component, another terminal of the first switch is connected to the first terminal of the second energy storage component, and a second terminal of the second energy storage component is connected to the second leg set.

According to the electric vehicle battery control circuit provided in the embodiments of this application, the charging module is provided with the second energy storage component, and specifically, with regulation control through the regulation switch component, one or multiple energy storage elements in the second energy storage component can be selected to enter the control circuit, meeting different heating needs of the electric vehicle battery in different scenarios.

In some embodiments, the regulation switch component further includes a leg selection switch component, one terminal of the first switch is connected to the second terminal of the first energy storage component, another terminal of the first switch is connected to a first terminal of the leg selection switch component, and a second terminal of the leg selection switch component is connected to a first terminal of the second energy storage component.

According to the electric vehicle battery control circuit provided in the embodiments of this application, the charging module is provided with the second energy storage component, and through the leg selection switch component, one or multiple energy storage elements in the second energy storage component and one or multiple legs where the one or multiple energy storage elements are located can be selected to enter the control circuit, meeting different heating needs of the electric vehicle battery in different scenarios.

In some embodiments, the first energy storage component includes an M-phase motor; and the first leg set includes M phase legs, M being a positive integer; where M phase windings of the M-phase motor are respectively connected to connection points of upper and lower legs in the M phase legs in one-to-one correspondence.

According to the electric vehicle battery control circuit provided in the embodiments of this application, the first energy storage component formed by the leg set stores and provides energy during the charging/discharging process, ensuring the self-heating effect of the electric vehicle battery.

In some embodiments, the second energy storage component includes N phase inductors, and the second leg set includes N phase legs, N being a positive integer; where the N phase inductors are respectively connected to connection points of upper and lower legs in the N phase legs in one-to-one correspondence.

According to the electric vehicle battery control circuit provided in the embodiments of this application, the second energy storage component formed by the second leg set enhances the energy storage and provision during the charging/discharging process, improving the adjustment effect of self-heating of the electric vehicle battery.

In some embodiments, the charging module further includes a charging interface and a converter, where the charging module is connected to an external power source through the charging interface, and the charging module charges the electric vehicle battery through the converter.

According to the electric vehicle battery control circuit provided in the embodiments of this application, the charging module further includes a charging interface and a converter, achieving battery charging and self-heating without additional circuit device costs. In this case, it meets different heating needs of the electric vehicle battery in different scenarios and avoids various faults of the motor.

In some embodiments, two terminals of the electric vehicle battery are connected in parallel with a first capacitor.

According to the electric vehicle battery control circuit provided in the embodiments of this application, the first capacitor stabilizes the voltage of the electric vehicle battery, ensuring the stability and continuity of the voltage at two terminals of the electric vehicle battery during the charging/discharging process.

According to a second aspect, this application provides an electric device, including a control module and the electric vehicle battery control circuit according to any one of the embodiments of the first aspect, where the control module is connected to the energy storage module, the regulation switch component, and the switch module, and is configured to control the energy storage module, the regulation switch component, and the switch module, for regulating charging/discharging current between the energy storage module, and for regulating charging/discharging current between the electric vehicle battery and the charging module.

According to the electric device provided in the embodiments of this application, the energy storage module, the regulation switch component, and the switch module are controlled to achieve switching between different charging/discharging circuits of the electric vehicle battery, thereby regulating charging/discharging between the electric vehicle battery and the energy storage module, or regulating charging/discharging between the electric vehicle battery and the charging module as well as the energy storage module, so as to meet different heating needs of the electric vehicle battery in different scenarios and also avoid various faults of the motor.

According to a third aspect, this application provides an electric vehicle battery control system, including an external charging/discharging device and the electric device according to the second aspect, where the external charging/discharging device is connected to the electric device through a charging/discharging interface.

According to the electric vehicle battery control system provided in the embodiments of this application, the energy storage module, the regulation switch component, and the switch module are controlled to achieve switching between different charging/discharging circuits of the electric vehicle battery, thereby regulating charging/discharging between the electric vehicle battery and the energy storage module, or regulating charging/discharging between the electric vehicle battery and the charging module as well as the energy storage module, so as to meet different heating needs of the electric vehicle battery in different scenarios and also avoid various faults of the motor.

According to a fourth aspect, this application provides an electric vehicle battery heating method, characterized by being applied to the electric device according to the second aspect, including: obtaining a battery heating signal; controlling the energy storage module, the regulation switch component, and the switch module according to the battery heating signal, to regulate charging/discharging between the electric vehicle battery and the energy storage module; or controlling the energy storage module, the regulation switch component, and the switch module according to the battery heating signal, to regulate charging/discharging between the electric vehicle battery and the charging module as well as the energy storage module.

According to the electric vehicle battery heating method provided in the embodiments of this application, the energy storage module, the regulation switch component, and the switch module are controlled to achieve switching between different charging/discharging circuits of the electric vehicle battery, thereby regulating charging/discharging between the electric vehicle battery and the energy storage module, or regulating charging/discharging between the electric vehicle battery and the charging module as well as the energy storage module, so as to meet different heating needs of the electric vehicle battery in different scenarios and also avoid various faults of the motor.

In some embodiments, the energy storage module, the regulation switch component, and the switch module are controlled according to the battery heating signal to regulate charging/discharging between the electric vehicle battery and the energy storage module, specifically including: during a first period, controlling the energy storage module, the regulation switch component, and the switch module to make the electric vehicle battery charge the energy storage module; and during a second period, controlling the energy storage module, the regulation switch component, and the switch module to make the energy storage module charge and heat the electric vehicle battery; where the control in the first period and the control in the second period are continuously alternated.

According to the electric vehicle battery heating method provided in the embodiments of this application, in the process of regulating charging/discharging between the electric vehicle battery and the energy storage module, first, the electric vehicle battery is controlled to charge the energy storage module, and then the energy storage module is controlled to charge and heat the electric vehicle battery, thereby meeting different heating needs of the electric vehicle battery in different scenarios and avoiding various faults of the motor.

In some embodiments, the energy storage module includes a first leg set and a first energy storage component, the switch module includes a second leg set; and the regulation switch component includes a first switch, a second switch, and a third switch. The energy storage module, the regulation switch component, and the switch module are controlled to make the electric vehicle battery charge the energy storage module, specifically including: controlling all upper legs in the first leg set, at least one lower leg in the second leg set, the first switch, and the third switch to turn on, and the second switch to turn off.

According to the electric vehicle battery heating method provided in the embodiments of this application, when the electric vehicle battery is needed to charge the energy storage module, all upper legs in the first leg set, at least one lower leg in the second leg set, the first switch, and the third switch are controlled to turn on, and the second switch is controlled to turn off.

In some embodiments, the energy storage module includes a first leg set and a first energy storage component, the charging module includes a second energy storage component, the switch module includes a second leg set; and the regulation switch component includes a first switch, a second switch, and a third switch. The energy storage module, the regulation switch component, and the switch module are controlled to make the energy storage module charge and heat the electric vehicle battery, specifically including: controlling all lower legs in the leg set, at least one upper leg in the second leg set, the first switch, and the second switch to turn on, and the third switch to turn off.

According to the electric vehicle battery heating method provided in the embodiments of this application, when the energy storage module is needed to charge and heat the electric vehicle battery, all lower legs in the leg set, at least one upper leg in the second leg set, the first switch, and the second switch are controlled to turn on, and the third switch is controlled to turn off.

In some embodiments, the energy storage module, the regulation switch component, and the switch module are controlled according to the battery heating signal to regulate charging/discharging between the electric vehicle battery and the charging module as well as the energy storage module, specifically including: during a first period, controlling the energy storage module, the regulation switch component, and the switch module to make the electric vehicle battery charge the energy storage module and the charging module; and during a second period, controlling the energy storage module, the regulation switch component, and the switch module to make the energy storage module and the charging module charge and heat the electric vehicle battery; where the control in the first period and the control in the second period are continuously alternated.

According to the electric vehicle battery heating method provided in the embodiments of this application, in the process of regulating charging/discharging between the electric vehicle battery and the charging module as well as the energy storage module, first, the electric vehicle battery is controlled to charge the energy storage module and the charging module, and then the energy storage module and the charging module are controlled to charge and heat the electric vehicle battery, thereby meeting different heating needs of the electric vehicle battery in different scenarios and avoiding various faults of the motor.

In some embodiments, the energy storage module includes a first leg set and a first energy storage component, the charging module includes a second energy storage component, the switch module includes a second leg set; and the regulation switch component includes a first switch, a second switch, and a third switch. The energy storage module, the regulation switch component, and the switch module are controlled to make the electric vehicle battery charge the energy storage module and the charging module, specifically including: controlling all upper legs in the first leg set, at least one lower leg in the second leg set, the first switch, and the third switch to turn on, and the second switch to turn off.

According to the electric vehicle battery heating method provided in the embodiments of this application, when the electric vehicle battery is needed to charge the energy storage module and the charging module, all upper legs in the first leg set, at least one lower leg in the second leg set, the first switch, and the third switch are controlled to turn on, and the second switch is controlled to turn off.

In some embodiments, the energy storage module includes a first leg set and a first energy storage component, the charging module includes a second energy storage component, the switch module includes a second leg set; and the regulation switch component includes a first switch, a second switch, and a third switch. The energy storage module, the regulation switch component, and the switch module are controlled to make the energy storage module and the charging module charge and heat the electric vehicle battery, specifically including: controlling all lower legs in the leg set, at least one upper leg in the second leg set, the first switch, and the second switch to turn on, and the third switch to turn off.

According to the electric vehicle battery heating method provided in the embodiments of this application, when the energy storage module and the charging module are needed to charge and heat the electric vehicle battery, all lower legs in the leg set, at least one upper leg in the second leg set, the first switch, and the second switch are controlled to turn on, and the third switch is controlled to turn off.

In some embodiments, the method further includes: obtaining a battery heating stop signal; and turning off the regulation switch component.

According to the electric vehicle battery heating method provided in the embodiments of this application, after the self-heating of the battery ends, the heating work can be terminated by operating at least one switch in the regulation switch component.

According to a fifth aspect, this application provides an electric vehicle battery control device, including: a memory for storing executable instructions and a processor connected to the memory for executing the executable instructions to implement the electric vehicle battery heating method according to any one of the embodiments of the fourth aspect.

According to the electric vehicle battery control device provided in the embodiments of this application, the energy storage module, the regulation switch component, and the switch module are controlled to achieve switching between different charging/discharging circuits of the electric vehicle battery, thereby regulating charging/discharging between the electric vehicle battery and the energy storage module, or regulating charging/discharging between the electric vehicle battery and the charging module as well as the energy storage module, so as to meet different heating needs of the electric vehicle battery in different scenarios and also avoid various faults of the motor.

According to a sixth aspect, this application provides a computer-readable storage medium, where the computer-readable storage medium stores a computer program; and the computer program is executed by a processor to implement the electric vehicle battery heating method according to any one of the embodiments of the fourth aspect.

According to the computer-readable storage medium provided in the embodiments of this application, the energy storage module, the regulation switch component, and the switch module are controlled to achieve switching between different charging/discharging circuits of the electric vehicle battery, thereby regulating charging/discharging between the electric vehicle battery and the energy storage module, or regulating charging/discharging between the electric vehicle battery and the charging module as well as the energy storage module, so as to meet different heating needs of the electric vehicle battery in different scenarios and also avoid various faults of the motor.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and persons of ordinary skill in the art may still derive other drawings from the accompanying drawings without creative efforts.
FIG. 1 is a schematic diagram of an application architecture of a charging method according to an embodiment of this application.
FIG. 2 is a schematic diagram of modules of an electric vehicle battery control circuit according to an embodiment of this application.
FIG. 3 is a circuit diagram of an electric vehicle battery control circuit according to an embodiment of this application.
FIG. 4 is a schematic block diagram of an electric device according to an embodiment of this application.
FIG. 5 is a schematic block diagram of an electric vehicle battery control system according to an embodiment of this application.
FIG. 6 is a schematic flowchart of an electric vehicle battery heating method according to an embodiment of this application.
FIG. 7 is a schematic flowchart of a first scenario of an electric vehicle battery self-heating method according to this application.
FIG. 8 is a schematic diagram of a circuit loop of an electric vehicle battery control system corresponding to a first period in the heating method of the first scenario.
FIG. 9 is a schematic diagram of a circuit loop of an electric vehicle battery control system corresponding to a second period in the heating method of the first scenario.
FIG. 10 is a schematic flowchart of a second scenario of an electric vehicle battery self-heating method according to this application.
FIG. 11 is a schematic diagram of a circuit loop of an electric vehicle battery control system corresponding to a first period in the heating method of the second scenario.
FIG. 12 is a schematic diagram of a circuit loop of an electric vehicle battery control system corresponding to a second period in the heating method of the second scenario.
FIG. 13 is a schematic structural diagram of an electric vehicle battery control device according to an embodiment of this application.

In the accompanying drawings, the figures are not drawn to actual scale.

### DETAILED DESCRIPTION

The implementations of this application are further described in detail below with reference to the accompanying drawings and embodiments. The detailed description of the embodiments and the accompanying drawings are intended to illustratively explain the principles of this application, but not to limit the scope of this application, that is, this application is not limited to the described embodiments.

In the description of this application, it should be noted that unless otherwise specified, "multiple" means two or more; and the orientations or positional relationships indicated by the terms such as "upper", "lower", "left", "right", "inner", and "outer" are merely for ease and brevity of description of this application rather than indicating or implying that the apparatuses or elements mentioned must have specific orientations or must be constructed or manipulated according to specific orientations, and therefore shall not be construed as any limitation on this application. Moreover, terms such as "first", "second", "third", and the like are only for descriptive purposes and cannot be understood as any indication or implication of relative importance. "Vertical" is not strictly vertical but within an allowable error range. "Parallel" is not strictly parallel but within an allowable error range.

The orientation terms appearing in the following description all refer to directions shown in the figures and do not limit the specific structure of this application. In the description of this application, it should also be noted that unless otherwise explicitly specified and limited, terms "install", "join", and "connect" should be understood in their general senses, for example, they may refer to a fixed connection, a detachable connection, or an integral connection, and may refer to a direct connection or an indirect connection via an intermediate medium. Persons of ordinary skill in the art can understand specific meanings of these terms in this application as appropriate to specific situations.

With the development of battery technology, various performances of traction batteries are continuously improved, especially the voltage of traction batteries, which generally has a significant increase. Currently, to enhance the adaptability of electric vehicles in cold regions and improve the battery heating effects, in most cases, the heating technology of traction batteries is used. However, during the battery heating process, motors may experience faults such as phase loss or short circuits. How the charging/discharging of traction batteries is flexibly adjusted and controlled without encountering faults is an urgent problem to be solved.

In view of this, an embodiment of this application provides an electric vehicle battery control circuit, system, and control method. The control circuit includes an electric vehicle battery, an energy storage module, a charging module, and a regulation switch component; where the charging module includes a switch module; the electric vehicle battery is connected in parallel with the switch module; the regulation switch component includes multiple switches; where the multiple switches are disposed between the electric vehicle battery and the charging module and between the energy storage module and the charging module; and the energy storage module, the regulation switch component, and the switch module are configured to, in response to control signals, regulate charging/discharging between the electric vehicle battery and the energy storage module, or regulate charging/discharging between the electric vehicle battery and the charging module as well as the energy storage module.

When applied in the field of new energy vehicles, the electric vehicle battery control circuit, system, and control method provided in this application solve the problems of low effective value of heating current during the battery self-heating process and abnormal noise and vibration of the motor, achieving the self-heating function of the vehicle and the battery in the vehicle through charging/discharging by the inductor.

The electric vehicle battery in the embodiments of this application may be a lithium-ion battery, lithium metal battery, lead-acid battery, nickel-cadmium battery, nickel-metal hydride battery, lithium-sulfur battery, lithium-air battery, sodium-ion battery, or the like, without limitation. In terms of scale, the battery in the embodiments of this application may be a single cell, a battery module, or a battery pack, without limitation. In terms of application scenario, the battery may be used in power apparatuses such as cars and ships. For example, it may be applied in power vehicles to power a motor of the power vehicle as a power source for the electric vehicle. The battery can also power other electric devices in the electric vehicle, such as a vehicular air conditioner and a vehicular player.

For convenience of description, the application of the electric vehicle battery in new energy vehicles (power vehicles) will be described as an example.

The drive motor and its control system are one of the core components of new energy vehicles, and their driving characteristics determine the main performance indicators of vehicle driving. The motor drive system of new energy vehicles mainly consists of an electric motor (that is, motor), power converter, motor controller (such as inverter), various detection sensors, and power sources. The motor is a rotating electromagnetic machinery that operates based on the principle of electromagnetic induction, and is used to convert electrical energy into mechanical energy. It absorbs electric power from the electrical system and outputs mechanical power to the mechanical system when operating.

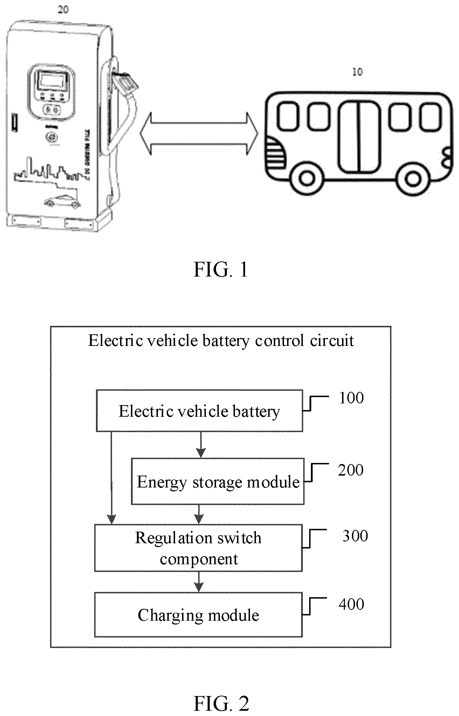

FIG. 1 is a schematic diagram of an application architecture to which a charging method can be applied according to an embodiment of this application. The application architecture includes a battery management system (Battery Management System, BMS) 10 and a charging pile 20. The BMS 10 can be connected to the charging pile 20 through a communication line to interact information with the charging pile 20. For example, the communication line can be a controller area network (Controller Area Network, CAN) communication line or a daisy chain communication line.

The BMS 10 is the BMS of the electric vehicle battery, and the electric vehicle battery is the battery that provides a power source for the electric apparatus. Optionally, the electric vehicle battery can be an energy storage battery. In terms of battery types, the electric vehicle battery can be a lithium-ion battery, lithium metal battery, lead-acid battery, nickel-cadmium battery, nickel-metal hydride battery, lithium-sulfur battery, lithium-air battery, sodium-ion battery, or the like, without specific limitation in the embodiments of this application. In terms of battery scale, the electric vehicle battery in the embodiments of this application can be a cell/battery single unit, a battery module, or a battery pack, without specific limitation in the embodiments of this application. Optionally, the electric apparatus can be a vehicle, ship, spacecraft, or the like, which is not limited in the embodiments of this application. The BMS is a control system that protects the safe use of the electric vehicle battery, implementing functions such as charge and discharge management, high-voltage control, battery protection, battery data collection, and battery status evaluation. The BMS can be integrated with the electric vehicle battery in the same device/appliance, or the BMS can also be provided as an independent device/appliance outside the electric vehicle battery.

The charging pile 20, also known as a charging machine, is an apparatus for charging the electric vehicle battery. The charging pile can output charging power according to the charging requirements of the BMS 10 to charge the electric vehicle battery. For example, the charging pile 20 can output voltage and current according to the demand voltage and demand current sent by the BMS 10.

To meet the self-heating needs of traction batteries in different scenarios, this application provides an electric vehicle battery voltage regulation circuit.

FIG. 2 is a schematic diagram of modules of an electric vehicle battery control circuit according to an embodiment of this application.

As shown in FIG. 2, this application provides an electric vehicle battery control circuit, including an electric vehicle battery 100, an energy storage module 200, a charging module 400, and a regulation switch component 300.

The charging module 400 includes a switch module; the electric vehicle battery 100 is connected in parallel with the switch module. The regulation switch component 300 includes multiple switches, and the multiple switches are disposed between the electric vehicle battery 100 and the charging module 400 and between the energy storage module 200 and the charging module 400.

The energy storage module 200, the regulation switch component 300, and the switch module are configured to, in response to control signals, regulate charging/discharging between the electric vehicle battery 100 and the energy storage module 200, or regulate charging/discharging between the electric vehicle battery 100 and the charging module 400 as well as the energy storage module 200.

According to the electric vehicle battery control circuit provided in the embodiments of this application, the energy storage module 200, the regulation switch component 300, and the switch module are controlled to achieve switching between different charging/discharging circuits of the electric vehicle battery 100, thereby regulating charging/discharging between the electric vehicle battery 100 and the energy storage module 200, or regulating charging/discharging between the electric vehicle battery 100 and the charging module 400 as well as the energy storage module 200, so as to meet different heating needs of the electric vehicle battery 100 in different scenarios and also avoid various faults of the motor.

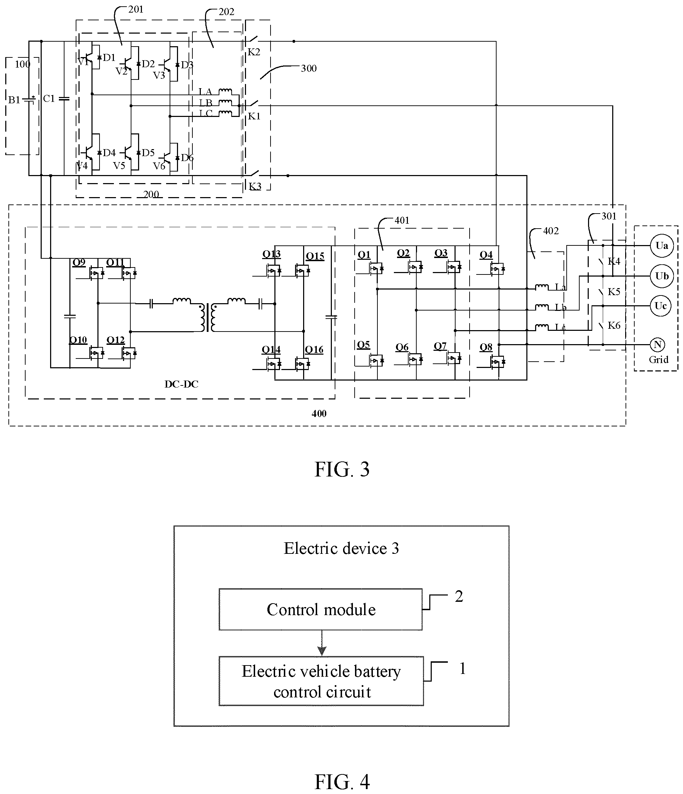

FIG. 3 is a schematic block diagram of an electric vehicle battery voltage control circuit 1 according to an embodiment of this application.

Specifically, as shown in FIG. 3, the regulation switch component 300 includes a first switch K1, a second switch K2, and a third switch K3; the first switch K1 is disposed between the energy storage module 200 and the charging module 400. The second switch K2 and the third switch K3 are disposed between the electric vehicle battery 100 and the charging module 400.

Based on this, switching between different heating circuits can be achieved by controlling switches in the regulation switch component 300 at different positions in the heating circuit of the electric vehicle battery 100. Specifically, different switches in the regulation switch component 300 are controlled to turn on or turn off to form, within a same circuit structure, a mode of regulating charging/discharging between the electric vehicle battery 100 and the energy storage module 200 or a mode of regulating charging/discharging between the electric vehicle battery 100 and the charging module 400 as well as the energy storage module 200, thereby meeting different heating needs of the electric vehicle battery 100 in different scenarios and also avoiding various faults of the motor.

Further defined, the energy storage module 200 includes a first leg set 201 and a first energy storage component 202. Optionally, the first leg set 201 includes multiple sets of legs, each set of legs consists of upper and lower legs, and each upper or lower leg consists of a transistor and a diode connected in parallel, forming a leg branch. The first leg set 201 is connected in parallel with the electric vehicle battery 100. The first energy storage component 202 includes a motor and motor windings.

The switch module includes a second leg set 401. Optionally, the second leg set 401 also includes multiple sets of legs, each set of legs consists of upper and lower legs, and each upper or lower leg consists of a transistor and a diode connected in parallel, forming a leg branch.

A first terminal of the first energy storage component 202 is connected to the first leg set 201, one terminal of the first switch K1 is connected to a second terminal of the first energy storage component 202, and another terminal of the first switch K1 is connected to a first terminal of the switch module; one terminal of the second switch K2 is connected to connection points of all upper legs of the first leg set 201, and another terminal of the second switch K2 is connected to connection points of all upper legs in the switch module; one terminal of the third switch K3 is connected to connection points of all lower legs of the first leg set 201, and another terminal of the third switch K3 is connected to connection points of all lower legs in the switch module; and at least one leg of the switch module is connected in parallel with the first leg set 201.

Based on this, according to the electric vehicle battery control circuit provided in this embodiment, in addition to controlling the regulation switch component 300, it also controls the energy storage module 200 and the switch module to achieve switching between different heating circuits. With different legs in the energy storage module 200 and the switch module controlled to turn on/off, it is possible to form, within a same circuit structure, a mode of regulating charging/discharging between the electric vehicle battery 100 and the energy storage module 200 or a mode of regulating charging/discharging between the electric vehicle battery 100 and the charging module 400 as well as the energy storage module 200, thereby meeting different heating needs of the electric vehicle battery 100 in different scenarios and also avoiding various faults of the motor.

As shown in FIG. 3, the regulation switch component 300 further includes a leg selection switch component 301; another terminal of the first switch K1 is connected to a first terminal of the leg selection switch component 301, and another terminal of the leg selection switch component 301 is connected to the second leg set 401.

According to the electric vehicle battery control circuit provided in the embodiments of this application, legs in the second leg set 401 can be selected through the leg selection switch component 301 according to needs. One leg can be selected to enter the circuit, or two or all legs can be selected to enter the control circuit, meeting different heating needs of the electric vehicle battery 100 in different scenarios.

Preferably, as shown in FIG. 3, the charging module 400 further includes a second energy storage component 402 connected to the switch module, that is, the second leg set 401, and the first switch K1 is disposed between the energy storage module 200 and the second energy storage component 402.

Based on this, providing the second energy storage component 402 in the charging module 400 improves the heating efficiency during the battery self-heating process, meeting the need for rapid battery self-heating.

Further defined, as shown in FIG. 3, one terminal of the first switch K1 is connected to the second terminal of the first energy storage component 202, another terminal of the first switch K1 is connected to the first terminal of the second energy storage component 402, and a second terminal of the second energy storage component 402 is connected to the second leg set 401.

Based on this, the charging module 400 is provided with the second energy storage component 402, and specifically, with regulation control through the regulation switch component 300, one or multiple energy storage elements in the second energy storage component 402 can be selected to enter the control circuit, meeting different heating needs of the electric vehicle battery 100 in different scenarios.

Preferably, as shown in FIG. 3, the regulation switch component 300 further includes a leg selection switch component 301. One terminal of the first switch K1 is connected to the second terminal of the first energy storage component 202, another terminal of the first switch K1 is connected to a first terminal of the leg selection switch component 301, and a second terminal of the leg selection switch component 301 is connected to a first terminal of the second energy storage component 402.

Thus, the charging module 400 is provided with the second energy storage component 402, and through the leg selection switch component 301, one or multiple energy storage elements in the second energy storage component 402 and one or multiple legs where the one or multiple energy storage elements are located can be selected to enter the control circuit, meeting different heating needs of the electric vehicle battery 100 in different scenarios.

Optionally, the first energy storage component 202 includes an M-phase motor; and the first leg set 201 includes M phase legs, M being a positive integer; where M phase windings of the M-phase motor are respectively connected to connection points of upper and lower legs in the M phase legs in one-to-one correspondence. In a preferred embodiment, as shown in FIG. 2, taking a three-phase motor as an example, M phase windings can include three inductors, specifically including: an inductor LA connected to a U-phase leg, an inductor LB connected to a V-phase leg, and an inductor LC connected to a W-phase leg. One terminal of inductor LA is connected to a connection point of the upper and lower legs in the U-phase leg, one terminal of inductor Lb is connected to a connection point of the upper and lower legs in the V-phase leg, and one terminal of inductor LC is connected to a connection point of the upper and lower legs in the W-phase leg. The other terminals of inductors LA, LB, and LC are connected together, and this connection point is the three-phase center point of the motor.

It should be noted that the motor is not limited to a three-phase motor but can also be a six-phase motor or the like, correspondingly, a six-phase motor can include six phase legs.

According to the electric vehicle battery control circuit provided in the embodiments of this application, the first energy storage component 202 formed by the leg set stores and provides energy during the charging/discharging process, ensuring the self-heating effect of the electric vehicle battery 100.

In some embodiments, the second energy storage component 402 includes N phase inductors, and the second leg set 401 includes N phase legs, N being a positive integer; N phase inductors are respectively connected to connection points of upper and lower legs in the N phase legs in one-to-one correspondence. In a preferred embodiment, as shown in FIG. 2, taking including three phase legs and three inductors as an example, it specifically includes: an inductor La connected to the first leg, an inductor Lb connected to the second leg, and an inductor Lc connected to the third leg. One terminal of inductor La is connected to a connection point of upper and lower legs in the first leg, one terminal of inductor Lb is connected to a connection point of upper and lower legs in the second leg, and one terminal of inductor Lc is connected to a connection point of upper and lower legs in the third leg. The other terminals of inductors La, Lb, and Lc are respectively connected to three phase power sources Ua, Ub, and Uc of the grid.

Based on this, according to the electric vehicle battery control circuit provided in the embodiments of this application, the second energy storage component 402 formed by the second leg set 401 enhances the energy storage and provision during the charging/discharging process, improving the adjustment effect of self-heating of the electric vehicle battery 100.

Further, the leg selection switch component 301 includes a fourth switch K4, a fifth switch K5, and a sixth switch K6. The fourth switch K4 is disposed between a first leg and a second leg at a connection point of the charging module 400 with the grid, the fifth switch K5 is disposed between a second leg and a third leg at a connection point of the charging module 400 with the grid, and the sixth switch K6 is disposed between a third leg and a ground leg at a connection point of the charging module 400 with the grid.

Thus, K4, K5, and K6 can be turned on as needed. In the scenario shown in FIG. 2, if all are turned off, then only the second leg and inductor Lb work; if only K4 is turned on, then the first leg, the second leg, and inductors La and Lb work; if only K5 is turned on, then the second leg, the third leg, and inductors Lb and Lc work; if K4 and K5 are turned on, then the three legs and inductors La, Lb, and Lc all work; and if K5, K6 are turned on, then no inductor is connected to the circuit. In this embodiment, the circuit is described with an example where K4 and K5 are turned on and the three legs and inductors La, Lb, and Lc all work.

K4, K5, and K6 in the leg selection switch component 301 are used to select legs in the second leg set 401 according to needs. One leg can be selected to enter the circuit, or two or all legs can be selected to enter the control circuit, meeting different heating needs of the electric vehicle battery 100 in different scenarios.

As shown in FIG. 3, further described, the charging module 400 further includes a charging interface connected to the grid and a converter DC-DC. The charging module 400 is connected to an external power source through the charging interface and charges the electric vehicle battery 100 through the converter.

Therefore, the electric vehicle battery control circuit provided in the embodiments of this application can achieve battery charging and self-heating through the charging module 400 without additional circuit device costs. In this case, it meets different heating needs of the electric vehicle battery 100 in different scenarios and avoids various faults of the motor.

Optionally, two terminals of the electric vehicle battery 100 are connected in parallel with a first capacitor C1.

Thus, the voltage of the electric vehicle battery 100 is stabilized by the first capacitor C1, ensuring the stability and continuity of the voltage at two terminals of the electric vehicle battery 100 during the charging/discharging process.

FIG. 3 is a schematic block diagram of an electric device 3 according to an embodiment of this application.

As shown in FIG. 4, the electric device 3 includes a control module 2 and a voltage control circuit 1 of an electric vehicle battery 100.

As shown in FIG. 4, the control module is connected to an energy storage module 200, a regulation switch component 300, and a switch module of the voltage control circuit 1 of the electric vehicle battery 100 to control the energy storage module 200, the regulation switch component 300, and the switch module to regulate charging/discharging current between the energy storage module 200 and to regulate charging/discharging current between the electric vehicle battery 100 and the charging module 400.

Based on this, according to the electric device provided in this embodiment, the energy storage module 200, the regulation switch component 300, and the switch module are controlled to achieve switching between different charging/discharging circuits of the electric vehicle battery 100, thereby regulating charging/discharging between the electric vehicle battery 100 and the energy storage module 200, or regulating charging/discharging between the electric vehicle battery 100 and the charging module 400 as well as the energy storage module 200, so as to meet different heating needs of the electric vehicle battery 100 in different scenarios and also avoid various faults of the motor.

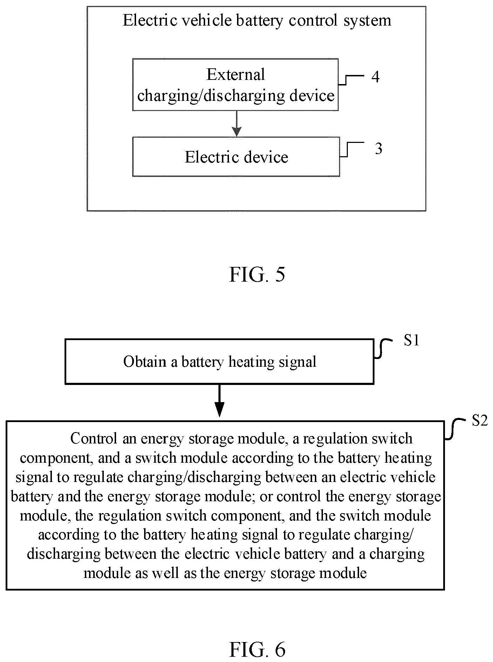

FIG. 5 is a schematic block diagram of an electric vehicle battery 100 control system according to an embodiment of this application.

As shown in FIG. 5, the electric vehicle battery 100 control system includes an external charging/discharging device and an electric device, where the external charging/discharging device is connected to the electric device through a charging/discharging interface.

Based on this, according to the electric vehicle battery 100 control system provided in the embodiments of this application, the energy storage module 200, the regulation switch component 300, and the switch module are controlled to achieve switching between different charging/discharging circuits of the electric vehicle battery 100, thereby regulating charging/discharging between the electric vehicle battery 100 and the energy storage module 200, or regulating charging/discharging between the electric vehicle battery 100 and the charging module 400 as well as the energy storage module 200, so as to meet different heating needs of the electric vehicle battery 100 in different scenarios and also avoid various faults of the motor.

FIG. 6 is a schematic flowchart of an electric vehicle battery 100 heating method according to an embodiment of this application.

Initially, the vehicle performs a self-check to determine whether it meets conditions for battery self-heating. If the conditions are met, the terminal sends a self-heating command.

As shown in FIG. 6, the electric vehicle battery 100 heating method, applied to the electric device, specifically includes the following steps.

S 1: Obtain a battery heating signal.

S2: Control the energy storage module 200, the regulation switch component 300, and the switch module according to the battery heating signal to regulate charging/discharging between the electric vehicle battery 100 and the energy storage module 200; or control the energy storage module 200, the regulation switch component 300, and the switch module according to the battery heating signal to regulate charging/discharging between the electric vehicle battery 100 and the charging module 400 as well as the energy storage module 200.

Based on this, according to the electric vehicle battery 100 heating method of this embodiment, the energy storage module 200, the regulation switch component 300, and the switch module are controlled to achieve switching between different charging/discharging circuits of the electric vehicle battery 100, thereby regulating charging/discharging between the electric vehicle battery 100 and the energy storage module 200, or regulating charging/discharging between the electric vehicle battery 100 and the charging module 400 as well as the energy storage module 200, so as to meet different heating needs of the electric vehicle battery 100 in different scenarios and also avoid various faults of the motor.

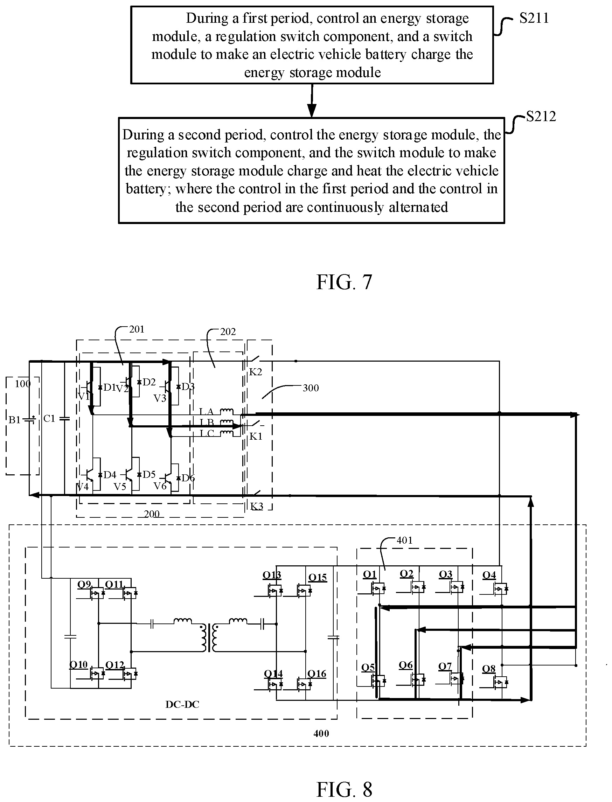

FIG. 7 is a schematic flowchart of a first scenario of an electric vehicle battery self-heating method according to this application.

In one implementation scenario, as shown in FIG. 7, the energy storage module 200, the regulation switch component 300, and the switch module are controlled according to the battery heating signal to regulate charging/discharging between the electric vehicle battery 100 and the energy storage module 200, specifically including the following steps.

S211: During a first period, control the energy storage module 200, the regulation switch component 300, and the switch module to make the electric vehicle battery 100 charge the energy storage module 200.

S211: During a second period, control the energy storage module 200, the regulation switch component 300, and the switch module to make the energy storage module 200 charge and heat the electric vehicle battery 100; where the control in the first period and the control in the second period are continuously alternated.

According to the electric vehicle battery 100 heating method provided based on this, in the process of regulating charging/discharging between the electric vehicle battery 100 and the energy storage module 200, first, the electric vehicle battery 100 is controlled to charge the energy storage module 200, and then the energy storage module 200 is controlled to charge and heat the electric vehicle battery 100. These steps are alternated to heat the electric vehicle battery 100 to a preset temperature. This meets different heating needs of the electric vehicle battery 100 in different scenarios and avoids various faults of the motor.

Further, in S211, the controlling the energy storage module 200, the regulation switch component 300, and the switch module to make the electric vehicle battery 100 charge the energy storage module 200 specifically includes: controlling all upper legs in the first leg set 201, at least one lower leg in the second leg set 401, the first switch K1, and the third switch K3 to turn on, and the second switch K2 to turn off.

FIG. 8 is a schematic diagram of a circuit loop of the electric vehicle battery 100 control system corresponding to a first period in the heating method of the first scenario.

In this way, it is achieved that the electric vehicle battery 100 charges the energy storage module 200.

Further, in S212, the controlling the energy storage module 200, the regulation switch component 300, and the switch module to make the energy storage module 200 charge and heat the electric vehicle battery 100 specifically includes: controlling all lower legs in the leg set, at least one upper leg in the second leg set 401, the first switch K 1, and the second switch K2 to turn on, and the third switch K3 to turn off.

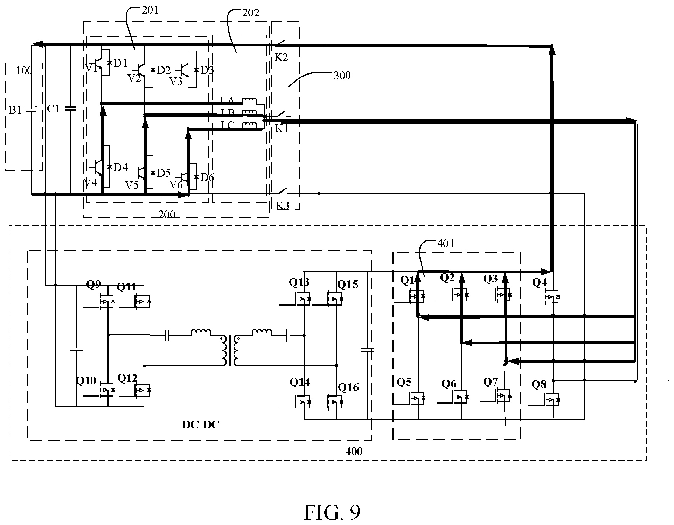

FIG. 9 is a schematic diagram of a circuit loop of the electric vehicle battery 100 control system corresponding to a second period in the heating method of the first scenario.

In this way, it is achieved that the energy storage module 200 charges and heats the electric vehicle battery 100.

As shown in FIGs. 8 and 9, the control in the first period and the control in the second period are continuously alternated, forming a self-heating circuit through the energy storage module 200 for heating the electric vehicle battery 100.

This embodiment is explained with the example where the three legs and inductors La, Lb, and Lc all work.

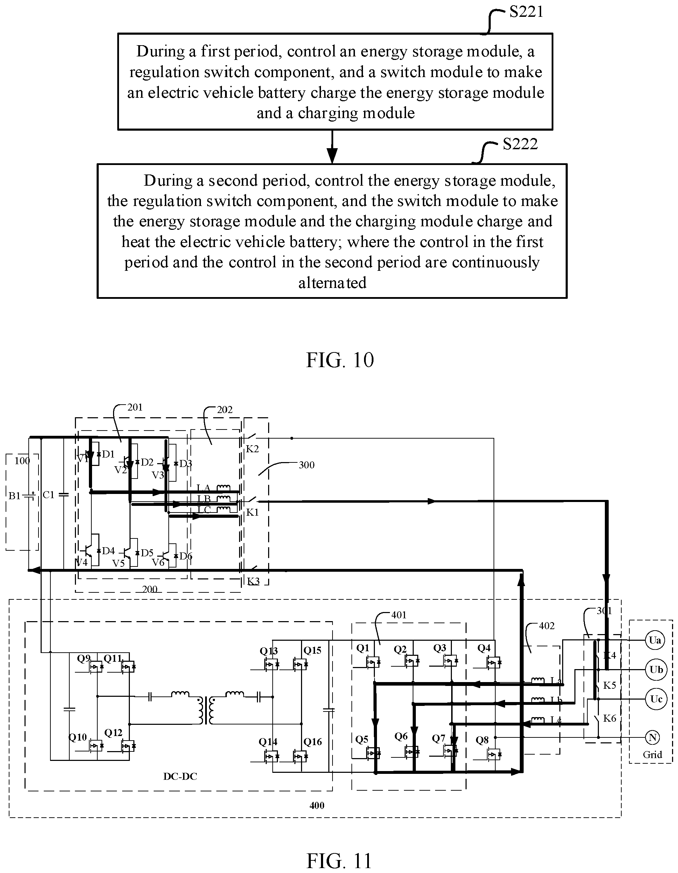

FIG. 10 is a schematic flowchart of a second scenario of an electric vehicle battery self-heating method according to this application.

In another preferred implementation scenario, as shown in FIG. 10, the energy storage module 200, the regulation switch component 300, and the switch module are controlled according to the battery heating signal to regulate charging/discharging between the electric vehicle battery 100 and the charging module 400 as well as the energy storage module 200, specifically including the following steps.

S221: During a first period, control the energy storage module 200, the regulation switch component 300, and the switch module to make the electric vehicle battery 100 charge the energy storage module 200 and the charging module 400.

S222: During a second period, control the energy storage module 200, the regulation switch component 300, and the switch module to make the energy storage module 200 and the charging module 400 charge and heat the electric vehicle battery 100; where the control in the first period and the control in the second period are continuously alternated.

According to the electric vehicle battery 100 heating method provided based on this, in the process of regulating charging/discharging between the electric vehicle battery 100 and the charging module 400 as well as the energy storage module 200, first, the electric vehicle battery 100 is controlled to charge the energy storage module 200 and the charging module 400, then both the energy storage module 200 and the charging module 400 are controlled to charge and heat the electric vehicle battery 100, thereby meeting different heating needs of the electric vehicle battery 100 in different scenarios and avoiding various faults of the motor.

Further, in S221, the controlling the energy storage module 200, the regulation switch component 300, and the switch module to make the electric vehicle battery 100 charge the energy storage module 200 and the charging module 400 specifically includes: controlling all upper legs in the first leg set 201, at least one lower leg in the second leg set 401, the first switch K1, and the third switch K3 to turn on, and the second switch K2 to turn off.

FIG. 11 is a schematic diagram of a circuit loop of an electric vehicle battery control system corresponding to a first period in the heating method of the second scenario.

As shown in FIG. 11, a current path is: from a positive terminal of the battery, through the upper legs V1, V2, and V3 of the motor, through the three phase inductors LA, LB, and LC of the motor, through the switch K1, through the three phase inductors La, Lb, and Lc of the charging module, through the lower legs Q5, Q6, and Q7 of the charging module, and through the switch K3, finally to a negative terminal of the battery.

In this way, it is achieved that the electric vehicle battery 100 charges the energy storage module 200 and the charging module 400.

Further, in S222, the controlling the energy storage module 200, the regulation switch component 300, and the switch module to make the energy storage module 200 and the charging module 400 charge and heat the electric vehicle battery 100 specifically includes: controlling all lower legs in the leg set, at least one upper leg in the second leg set 401, the first switch K1, and the second switch K2 to turn on, and the third switch K3 to turn off.

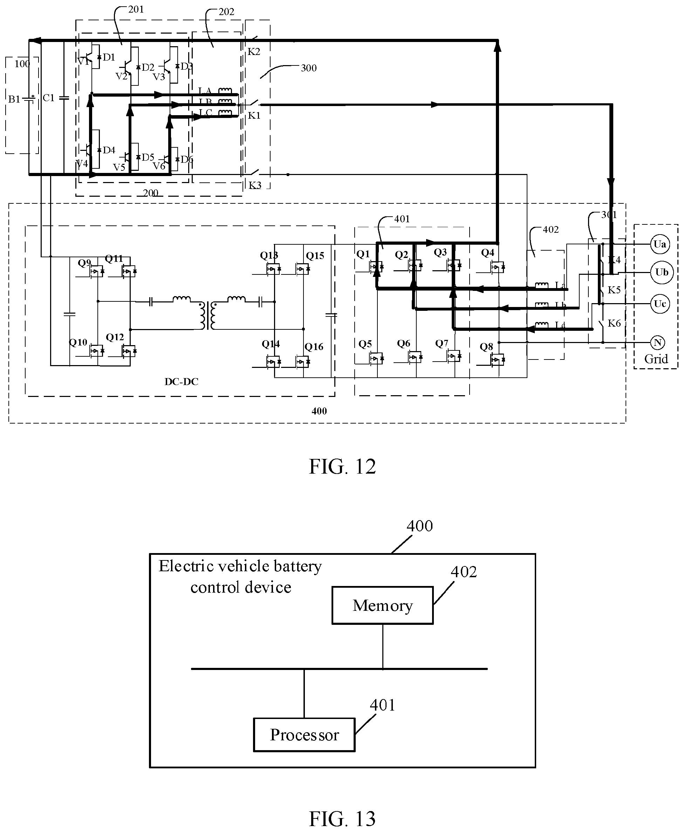

FIG. 12 is a schematic diagram of a circuit loop of an electric vehicle battery control system corresponding to a second period in the heating method of the second scenario.

As shown in FIG. 12, a current path is: from the three phase inductors LA, LB, and LC of the motor, through the switch K1, through the three phase inductors La, Lb, and Lc of the charging module, through the upper legs Q1, Q2, and Q3 of the charging module, through the switch K2, through a positive terminal of the battery, and through a negative terminal of the battery, finally to the lower legs V4, V5, and V6 of the motor.

In this way, it is achieved that both the energy storage module 200 and the charging module 400 charge and heat the electric vehicle battery 100.

As shown in FIGs. 11 and 12, the control in the first period and the control in the second period are continuously alternated, forming a self-heating circuit for heating the electric vehicle battery 100 through the energy storage module 200 and the charging module 400.

In some embodiments, the electric vehicle battery 100 heating method further includes: obtaining a battery heating stop signal; and turning off the regulation switch component 300. After the battery temperature reaches a preset value, heating stops. Then, all V1 to V6 switch tubes and Q1 to Q6 switch tubes in electronic control are turned off, and K1, K2, and K3 are turned off, completing the self-heating process.

After the self-heating of the battery ends, the heating work can be terminated by operating at least one switch in the regulation switch component 300.

In an embodiment of this application, a neutral point of a three-phase motor is connected in parallel with a leg of an in-vehicle charging module to form a self-heating circuit, reducing additional circuit costs, while reducing motor faults, ensuring stable motor operation, and achieving rapid battery heating.

Finally, after the battery temperature rises to the preset value, self-heating ends. After all switches in electronic control are turned off, a neutral line relay switch is turned off, for charging or entering the standby mode.

When applied in the field of new energy vehicles, the electric vehicle battery control circuit, system, and control method provided in this application solve the problems of low effective value of heating current during the battery self-heating process and abnormal noise and vibration of the motor, achieving the self-heating function of the vehicle and the battery in the vehicle through charging/discharging by the inductor.

FIG. 13 is a schematic structural diagram of an electric vehicle battery control device 400 according to an embodiment of this application.

As shown in FIG. 13, the electric vehicle battery control device 400 includes:
a memory 402 for storing executable instructions; and
a processor 401 connected to the memory 402 for executing the executable instructions to implement the electric vehicle battery control method.

Persons skilled in the art can understand that FIG. 13 is just an example of the electric vehicle battery control device 400 and does not constitute any limitation on the electric vehicle battery control device 400, which may include more or fewer components than shown in the figure, or combine some of the components, or have different components. For example, the electric vehicle battery control device 400 can also include input/output devices, network access devices, buses, or the like.

The processor 401 (Central Processing Unit, CPU) may also be another general-purpose processor, a digital signal processor ((Digital Signal Processor, DSP), an application-specific integrated circuit (Application Specific Integrated Circuit, ASIC), a field-programmable gate array (Field-Programmable Gate Array, FPGA), or another programmable logic device, a discrete gate or transistor logic device, a discrete hardware component, or the like. The general-purpose processor may be a microprocessor, or the processor 401 may be any conventional processor or the like. The processor 401 is a control center of the electric vehicle battery control device 400, utilizing various interfaces and lines to connect all parts of the electric vehicle battery control device 400.

The memory 402 can be used to store computer-readable instructions, the processor 401 runs or executes the computer-readable instructions or modules stored in the memory 402, and calls data stored in the memory 402, to implement various functions of the electric vehicle battery control device 400. The memory 402 can mainly include a program storage area and a data storage area, where the program storage area can store an operating system, an application program required by at least one function (such as sound play function and image play function), and the like; and the data storage area can store data created according to the use of the electric vehicle battery control device 400. In addition, the memory 402 may include hard disks, internal memory, plug-in hard disks, smart media cards (Smart Media Card, SMC), secure digital (Secure Digital, SD) cards, flash cards (Flash Card), at least one disk storage device, flash memory device, read-only memory (Read-Only Memory, ROM), random access memory (Random Access Memory, RAM), or other non-volatile/volatile memory devices.

When a module integrating the electric vehicle battery control device 400 is implemented in the form of a software functional module and sold or used as an independent product, the integrated module may also be stored in a computer-readable storage medium. Based on such understanding, all or part of the processes of the method in the embodiments of the present invention may be implemented by computer-readable instructions instructing related hardware. The computer-readable instructions may be stored in the computer-readable storage medium, and when the computer-readable instructions are executed by a processor, the steps in the foregoing method embodiments may be implemented.

According to the electric vehicle battery control device provided in the embodiments of this application, the energy storage module 200, the regulation switch component 300, and the switch module are controlled to achieve switching between different charging/discharging circuits of the electric vehicle battery 100, thereby regulating charging/discharging between the electric vehicle battery 100 and the energy storage module 200, or regulating charging/discharging between the electric vehicle battery 100 and the charging module 400 as well as the energy storage module 200, so as to meet different heating needs of the electric vehicle battery 100 in different scenarios and also avoid various faults of the motor.

Finally, this application further provides a computer-readable storage medium, which stores a computer program; where the computer program is executed by a processor to implement the electric vehicle battery heating method.

Persons of ordinary skill in the art will appreciate that the units and algorithm steps of various examples described with reference to the embodiments disclosed in this specification can be implemented by using electronic hardware or a combination of computer software and electronic hardware. Whether the functions are executed by hardware or software depends on particular applications and design constraints of the technical solutions. Persons skilled in the art can employ a different method to implement the described functions for each particular application, but such implementations shall not be construed as going beyond the scope of this application.

It may be clearly understood by persons skilled in the art that for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiments are merely illustrative. For example, the unit division is merely logical function division and other division manners may be used in actual implementation. For example, multiple units or components may be combined or integrated into another system, or some features may be ignored or not be performed. In addition, the displayed or discussed mutual couplings, direct couplings, or communication connections may be indirect couplings or communication connections through some interfaces, apparatuses, or units, and may be in electrical, mechanical, or other forms.

The units described as separate parts may or may not be physically separate. Parts displayed as units may or may not be physical units, meaning they may be located in one position or distributed on multiple network units. Some or all of the units may be selected depending on actual requirements to achieve the objectives of the solutions of the embodiments.

In addition, function units in the embodiments of this application may be integrated into one processing unit, or each of the units may exist alone physically, or two or more units may be integrated into one unit.

When implemented in a form of a software functional unit and sold or used as an independent product, the functions may be stored in a computer-readable storage medium. Based on such an understanding, the technical solutions of this application substantially or parts making contributions to the conventional art or part of the technical solutions may be embodied in form of software product, and the computer software product is stored in a storage medium, including multiple instructions configured to enable a computer device (which may be a personal computer, a server, a network device, or the like) to execute all or part of the steps of the method in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing content is merely specific implementations of this application, but is not intended to limit the protection scope of this application. Any variation or replacement readily figured out by persons skilled in the art within the technical scope disclosed in this application shall fall within the protection scope of this application. Therefore, the protection scope of this application shall be subject to the protection scope of the claims.

## Claims

1. An electric vehicle battery control circuit, **characterized by** comprising an electric vehicle battery; an energy storage module; a charging module; and a regulation switch component, wherein
the charging module comprises a switch module;
the electric vehicle battery is connected in parallel with the switch module;
the regulation switch component comprises multiple switches; wherein the multiple switches are disposed between the electric vehicle battery and the charging module and between the energy storage module and the charging module; and
the energy storage module, the regulation switch component, and the switch module are configured to, in response to control signals, regulate charging/discharging between the electric vehicle battery and the energy storage module, or regulate charging/discharging between the electric vehicle battery and the charging module as well as the energy storage module.

2. The control circuit according to claim 1, **characterized in that** the regulation switch component comprises a first switch, a second switch, and a third switch; wherein the first switch is disposed between the energy storage module and the charging module; and the second switch and the third switch are disposed between the electric vehicle battery and the charging module.

3. The control circuit according to claim 2, **characterized in that** the energy storage module comprises a first leg set and a first energy storage component, the first leg set being connected in parallel with the electric vehicle battery; the switch module comprises a second leg set; a first terminal of the first energy storage component is connected to the first leg set, one terminal of the first switch is connected to a second terminal of the first energy storage component, and another terminal of the first switch is connected to a first terminal of the switch module; one terminal of the second switch is connected to connection points of all upper legs of the first leg set, and another terminal of the second switch is connected to connection points of all upper legs in the switch module; one terminal of the third switch is connected to connection points of all lower legs of the first leg set, and another terminal of the third switch is connected to connection points of all lower legs in the switch module; and at least one leg of the switch module is connected in parallel with the first leg set.

4. The control circuit according to claim 3, **characterized in that** the regulation switch component further comprises a leg selection switch component; another terminal of the first switch is connected to a first terminal of the leg selection switch component, and another terminal of the leg selection switch component is connected to the second leg set.

5. The control circuit according to claim 3, **characterized in that** the charging module further comprises a second energy storage component connected to the switch module, and the first switch is disposed between the energy storage module and the second energy storage component.

6. The control circuit according to claim 5, **characterized in that** one terminal of the first switch is connected to the second terminal of the first energy storage component, another terminal of the first switch is connected to the first terminal of the second energy storage component, and a second terminal of the second energy storage component is connected to the second leg set.

7. The control circuit according to claim 5, **characterized in that** the regulation switch component further comprises a leg selection switch component;
one terminal of the first switch is connected to the second terminal of the first energy storage component, another terminal of the first switch is connected to a first terminal of the leg selection switch component, and a second terminal of the leg selection switch component is connected to a first terminal of the second energy storage component.

8. The control circuit according to any one of claims 3 to 7, **characterized in that** the first energy storage component comprises an M-phase motor; and the first leg set comprises M phase legs, M being a positive integer; wherein M phase windings of the M-phase motor are respectively connected to connection points of upper and lower legs in the M phase legs in one-to-one correspondence.

9. The control circuit according to any one of claims 5 to 7, **characterized in that** the second energy storage component comprises N phase inductors, and the second leg set comprises N phase legs, N being a positive integer; wherein the N phase inductors are respectively connected to connection points of upper and lower legs in the N phase legs in one-to-one correspondence.

10. The control circuit according to claim 1, **characterized in that** the charging module further comprises a charging interface and a converter, wherein the charging module is connected to an external power source through the charging interface, and the charging module charges the electric vehicle battery through the converter.

11. The control circuit according to claim 1, **characterized in that** two terminals of the electric vehicle battery are connected in parallel with a first capacitor.

12. An electric device, **characterized by** comprising a control module and the electric vehicle battery control circuit according to any one of claims 1 to 11; wherein
the control module is connected to the energy storage module, the regulation switch component, and the switch module, and is configured to control the energy storage module, the regulation switch component, and the switch module, to regulate charging/discharging current between the energy storage module and to regulate charging/discharging current between the electric vehicle battery and the charging module.

13. An electric vehicle battery control system, comprising an external charging/discharging device and the electric device according to claim 12, wherein the external charging/discharging device is connected to the electric device through a charging/discharging interface.

14. An electric vehicle battery heating method, **characterized by** being applied to the electric device according to claim 12, comprising:
obtaining a battery heating signal; and
controlling the energy storage module, the regulation switch component, and the switch module according to the battery heating signal, to regulate charging/discharging between the electric vehicle battery and the energy storage module; or
controlling the energy storage module, the regulation switch component, and the switch module according to the battery heating signal, to regulate charging/discharging between the electric vehicle battery and the charging module as well as the energy storage module.

15. The electric vehicle battery heating method according to claim 14, **characterized in that** the controlling the energy storage module, the regulation switch component, and the switch module according to the battery heating signal, to regulate charging/discharging between the electric vehicle battery and the energy storage module specifically comprises:
during a first period, controlling the energy storage module, the regulation switch component, and the switch module, to make the electric vehicle battery charge the energy storage module; and
during a second period, controlling the energy storage module, the regulation switch component, and the switch module, to make the energy storage module charge the electric vehicle battery; wherein
the control in the first period and the control in the second period are continuously alternated.

16. The electric vehicle battery heating method according to claim 15, **characterized in that** the energy storage module comprises a first leg set and a first energy storage component, the switch module comprises a second leg set, and the regulation switch component comprises a first switch, a second switch, and a third switch; and
the controlling the energy storage module, the regulation switch component, and the switch module, to make the electric vehicle battery charge the energy storage module specifically comprises:
controlling all upper legs in the first leg set, at least one lower leg in the second leg set, the first switch, and the third switch to turn on, and the second switch to turn off.

17. The electric vehicle battery heating method according to claim 15, **characterized in that** the energy storage module comprises a first leg set and a first energy storage component, the charging module comprises a second energy storage component, the switch module comprises a second leg set, and the regulation switch component comprises a first switch, a second switch, and a third switch; and
the controlling the energy storage module, the regulation switch component, and the switch module, to make the energy storage module charge the electric vehicle battery specifically comprises:
controlling all lower legs in the leg set, at least one upper leg in the second leg set, the first switch, and the second switch to turn on, and the third switch to turn off.

18. The electric vehicle battery heating method according to claim 14, **characterized in that** the controlling the energy storage module, the regulation switch component, and the switch module according to the battery heating signal, to regulate charging/discharging between the electric vehicle battery and the charging module as well as the energy storage module specifically comprises:
during a first period, controlling the energy storage module, the regulation switch component, and the switch module, to make the electric vehicle battery charge the energy storage module and the charging module; and
during a second period, controlling the energy storage module, the regulation switch component, and the switch module, to make the energy storage module and the charging module charge the electric vehicle battery; wherein
the control in the first period and the control in the second period are continuously alternated.

19. The electric vehicle battery heating method according to claim 18, **characterized in that** the energy storage module comprises a first leg set and a first energy storage component, the charging module comprises a second energy storage component, the switch module comprises a second leg set, and the regulation switch component comprises a first switch, a second switch, and a third switch; and
the controlling the energy storage module, the regulation switch component, and the switch module, to make the electric vehicle battery charge the energy storage module and the charging module specifically comprises:
controlling all upper legs in the first leg set, at least one lower leg in the second leg set, the first switch, and the third switch to turn on, and the second switch to turn off.

20. The electric vehicle battery heating method according to claim 18, **characterized in that** the energy storage module comprises a first leg set and a first energy storage component, the charging module comprises a second energy storage component, the switch module comprises a second leg set, and the regulation switch component comprises a first switch, a second switch, and a third switch; and
the controlling the energy storage module, the regulation switch component, and the switch module, to make the energy storage module and the charging module charge the electric vehicle battery specifically comprises:
controlling all lower legs in the leg set, at least one upper leg in the second leg set, the first switch, and the second switch to turn on, and the third switch to turn off.

21. The electric vehicle battery heating method according to any one of claims 14 to 20, **characterized by** further comprising:
obtaining a battery heating stop signal; and
turning off the regulation switch component.

22. An electric vehicle battery heating device, **characterized by** comprising:
a memory, configured to store executable instructions; and
a processor, connected to the memory, for executing the executable instructions to implement the electric vehicle battery heating method according to any one of claims 14 to 21.

23. A computer-readable storage medium, **characterized in that** the computer-readable storage medium stores a computer program; and the computer program is executed by a processor to implement the electric vehicle battery heating method according to any one of claims 14 to 21.
